# EUROPEAN PATENT APPLICATION

(11) **EP 4 657 709 A1**
(43) Date of publication of application: **03.12.2025**
(21) Application number: 25180016.5
(22) Date of filing: 30.05.2025
(51) Int. Cl.: H02J 7/00

(54) **SYSTEM AND METHOD FOR BALANCING PARALLEL BATTERY STRINGS**

(30) Priority: 31.05.2024 US 202418680533
(71) Applicant: PRATT & WHITNEY CANADA CORP., Longueuil, Québec J4G 1A1 (CA); National Research Council of Canada, Ottawa, Ontario K1A 0R6 (CA)
(72) Inventor: GARIEPY, Raphael, Longueuil, J4G 1A1 (CA); SHENOUDA, Antwan, Longueuil, J4G 1A1 (CA); CHOUINARD, Sebastien, Ottawa, K1A 0R6 (CA); RECOSKIE, Steven, Ottawa, K1A 0R6 (CA); FREER, Richard, Longueuil, J4G 1A1 (CA)
(74) Representative: Dehns

(57) **Abstract**

A battery system is provided that includes a plurality of battery strings, negative path electrical conductors, positive path electrical conductors, and string balancing resistors. The battery strings are disposed in a parallel configuration. Each battery string includes positive and negative terminals. The negative terminal of each battery string is selectively in electrical communication with a load through a respective negative path electrical conductor, and the positive terminal of each battery string is selectively in electrical communication with the load through a respective positive path electrical conductor. The battery system is configurable in a balancing state wherein the battery system is disconnected from the load and the battery system is configured such that the string balancing resistors cause the battery strings to balance in voltage relative to one another.

## Description

This disclosure relates generally to aircraft battery systems in general, and to aircraft battery systems having a plurality of battery strings in particular.

Each battery string disposed in a parallel configuration of battery strings can have state of charge as a result of the respective battery strings being subject to different temperatures, differences in electrical conduction losses, differences in battery string age, differences in battery string performance characteristics (e.g., capacity, discharge rate, and the like), and the like. The power produced by multiple battery strings in a parallel configuration can be used to drive a load. The voltage in each respective battery string must, however, be within a certain voltage threshold of the other battery strings within the parallel configuration in order not to exceed acceptable charge and discharge currents. A system that facilitates operation of battery strings in a parallel configuration would be desirable.

### SUMMARY

According to a first aspect of the present disclosure, a battery system is provided that includes a plurality of battery strings, a plurality of negative path electrical conductors, a plurality of positive path electrical conductors, and a plurality of string balancing resistors. The plurality of battery strings are disposed in a parallel configuration. Each battery string includes a positive terminal and a negative terminal. The negative terminal of each battery string is selectively in electrical communication with a load through a respective negative path electrical conductor, and the positive terminal of each battery string is selectively in electrical communication with the load through a respective positive path electrical conductor. The plurality of string balancing resistors are equal in number to the plurality of battery strings. The battery system is configurable in a balancing state, and in the balancing state the battery system is disconnected from the load and the battery system is configured such that the string balancing resistors cause the plurality of battery strings to balance in voltage relative to one another.

In any of the aspects or embodiments described above and herein, the plurality of negative path electrical conductors may be in electrical communication with one another and selectively in electrical communication with a load negative terminal, and the plurality of positive path electrical conductors may be in electrical communication with one another and selectively in electrical communication with a load positive terminal.

In any of the aspects or embodiments described above and herein, each respective string balancing resistor may be disposed in selective electrical communication with a respective positive path electrical conductor.

In any of the aspects or embodiments described above and herein, the system may include a plurality of string balancing resistor relays (SBR relays). Each respective SBR relay may be disposed in line with a respective string balancing resistor, and each SBR relay may be disposable in an open configuration and in a closed configuration.

In any of the aspects or embodiments described above and herein, the string balancing resistors may be connected to a common junction.

In any of the aspects or embodiments described above and herein, each negative path electrical conductor (NPEC) may include a NPEC contactor relay disposable in an open configuration or in a closed configuration, and each positive path electrical conductor (PPEC) of the plurality of positive path electrical conductors may include a PPEC contactor relay disposable in an open configuration or in a closed configuration. In the balancing state, the SBR relays may be in the closed configuration, the PPEC contactor relays may be in the open configuration, and the NPEC contactor relays may be in the closed configuration.

In any of the aspects or embodiments described above and herein, the battery system may be configurable in a charging/discharging state, and in the charging/discharging state, the plurality of SBR relays may be in the open configuration, the PPEC contactor relays may be in the closed configuration, and the NPEC contactor relays may be in the closed configuration.

In any of the aspects or embodiments described above and herein, the system may include a battery management system configured to control the plurality of SBR relays, the PPEC contactor relays, and the NPEC contactor relays such that in the balancing state, the plurality of SBR relays may be controlled to be in the closed configuration, the PPEC contactor relays may be controlled to be in the open configuration, and the NPEC contactor relays may be controlled to be in the closed configuration.

In any of the aspects or embodiments described above and herein, each respective string balancing resistor may be disposed in selective electrical communication with a respective negative path electrical conductor of the plurality of negative path electrical conductors.

In any of the aspects or embodiments described above and herein, each negative path electrical conductor (NPEC) may include a NPEC contactor relay disposable in an open configuration or in a closed configuration, and each positive path electrical conductor (PPEC) may include a PPEC contactor relay disposable in an open configuration or in a closed configuration. In the balancing state, the plurality of SBR relays may be in the closed configuration, the NPEC contactor relays may be in the open configuration, and the PPEC contactor relays may be in the closed configuration.

In any of the aspects or embodiments described above and herein, the system may include a battery management system configured to control the plurality of SBR relays, the PPEC contactor relays, and the NPEC contactor relays such that in the balancing state, the plurality of SBR relays may be controlled to be in the closed configuration, the PPEC contactor relays may be controlled to be in the closed configuration, and the NPEC contactor relays may be controlled to be in the open configuration.

According to a second aspect of the present disclosure, a battery system is provided that includes a plurality of battery string modules. Each battery string module includes a plurality of battery strings, a plurality of negative path electrical conductors, a plurality of positive path electrical conductors, and a plurality of string balancing resistors. The plurality of battery strings are disposed in a parallel configuration, and each battery string includes a positive terminal and a negative terminal. Each of the plurality of negative path electrical conductors (NPEC) may include an NPEC contactor relay disposable in an open configuration or in a closed configuration. Each of the positive path electrical conductors (PPEC) may include a PPEC contactor relay disposable in an open configuration or in a closed configuration. The negative terminal of each battery string is in electrical communication with a first bus through a respective negative path electrical conductor, and the positive terminal of each battery string is in electrical communication with a second bus through a respective positive path electrical conductor. The plurality of string balancing resistors are equal in number to the plurality of battery strings. The battery string modules are disposed in a series connection with one another. The battery system is configurable in a balancing state, and in the balancing state the battery string modules are disconnected from a load and the battery string modules in each battery string module are configured such that the string balancing resistors in the battery string module cause the plurality of battery strings in the battery string module to balance in voltage relative to one another.

According to a third aspect of the present disclosure, a method of operating a battery system having a plurality of battery strings is provided. The method includes: providing a plurality of battery strings disposed in a parallel configuration, wherein each battery string includes a positive terminal and a negative terminal, and providing a plurality of negative path electrical conductors (NPEC), each having a NPEC contactor relay disposable in an open configuration or in a closed configuration, and providing a plurality of positive path electrical conductors (PPEC), each having a PPEC contactor relay disposable in an open configuration or in a closed configuration; providing a plurality of string balancing resistors equal in number to the plurality of battery strings, wherein the string balancing resistors are connected to a common junction, and providing a string balancing resistor relay (SBR relay) associated with each string balancing resistor of the plurality of string balancing resistors, wherein each respective SBR relay is disposable in an open configuration and in a closed configuration; in a charging / discharging state, controlling the NPEC contactor relays to be in the closed configuration, the PPEC contactor relays to be in the closed configuration, and the SBR relays to be in the open configuration; and in a balancing state, controlling the SBR relays to be in the closed configuration, and controlling the NPEC contactor relays to be in the closed configuration and the PPEC contactor relays to be in the open configuration, or controlling the NPEC contactor relays to be in the open configuration and the PPEC contactor relays to be in the closed configuration.

In any of the aspects or embodiments described above and herein, the plurality of negative path electrical conductors may be selectively in electrical communication with one another and selectively in electrical communication with a load negative terminal, the plurality of positive path electrical conductors may be selectively in electrical communication with one another and selectively in electrical communication with a load positive terminal, and in the balancing state, the NPEC contactor relays may be controlled to be in the open configuration and the PPEC contactor relays may be controlled to be in the closed configuration.

In any of the aspects or embodiments described above and herein, the plurality of negative path electrical conductors may be selectively in electrical communication with one another and selectively in electrical communication with a load negative terminal, the plurality of positive path electrical conductors may be selectively in electrical communication with one another and selectively in electrical communication with a load positive terminal, and in the balancing state, the NPEC contactor relays may be controlled to be in the closed configuration and the PPEC contactor relays may be controlled to be in the open configuration.

In any of the aspects or embodiments described above and herein, a battery management system may be used to control the plurality of SBR relays, the PPEC contactor relays, and the NPEC contactor relays between the charging / discharging state and the balancing state.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting. The scope of protection is defined by the appended claims.

### BRIEF DESCRIPTION OF THE DRAWINGS

FIG. 1 is a diagrammatic illustration of a hybrid electric powerplant for an aircraft application.
FIG. 2 is a diagrammatic illustration of a thermal engine that may be used within a hybrid electric powerplant.
FIG. 3 is a diagrammatic illustration of a battery string.
FIG. 4 is a schematic of a battery system having battery strings in a parallel configuration.
FIG. 5 is a schematic of a battery system having battery strings in a parallel configuration.
FIG. 6 is a schematic of a battery system having battery strings in a parallel configuration.
FIG. 7 is a schematic of a battery system having battery strings in a parallel configuration.
FIG. 8 is a schematic of a battery system having a plurality of battery string modules, each in a parallel configuration.

### DETAILED DESCRIPTION

As will be described herein, the present disclosure is configured to balance voltages amongst a plurality of battery strings disposed in a parallel configuration that may be utilized to provide electrical power to an aircraft propulsion system.

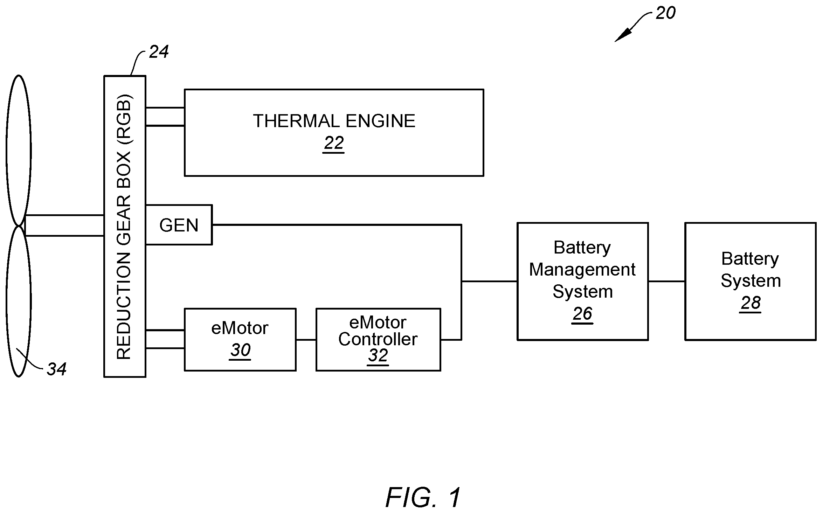

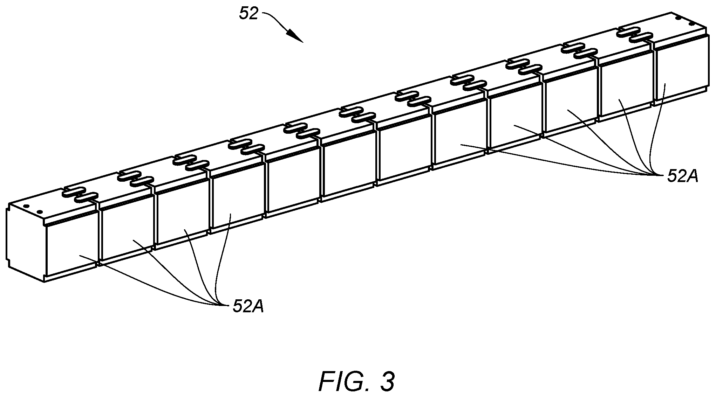

FIG. 1 diagrammatically illustrates a hybrid-electric propulsion system ("HEP system 20") embodiment that includes a thermal engine 22, a reduction gear box 24, a battery management system 26, a battery system 28 (including one or more battery strings 52; e.g., see FIG. 3), an electric motor ("eMotor 30"), an eMotor controller 32, and a propulsor 34; e.g., a propeller, or a fan blade, or the like. The HEP system 20 shown in FIG. 1 also includes a generator ("GEN") in communication with the reduction gear box 24. The HEP system 20 is provided to diagrammatically illustrate an example of a propulsion system with which embodiments of the present disclosure may be used. Embodiments of the present disclosure may be used with an all-electric propulsion system. The present disclosure is not limited to use with any particular type of HEP system or all-electric propulsion system. The present disclosure is not limited to use with any particular type of aircraft; e.g., the aircraft may be an airplane, a helicopter, a drone (e.g., an unmanned aerial vehicle (UAV)) or any other manned or unmanned aerial vehicle or system. To facilitate the description herein, the present disclosure will be described herein as used within a HEP system 20 as diagrammatically shown in FIG. 1.

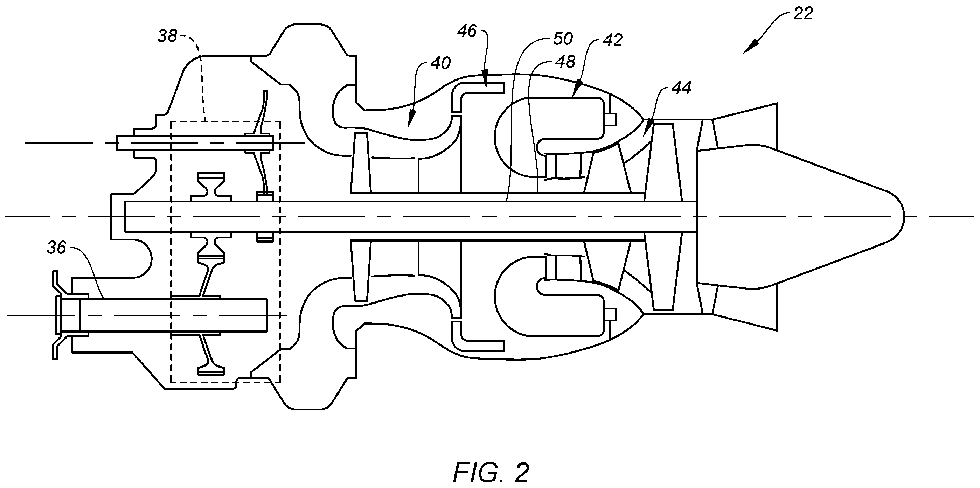

The term "thermal engine" as used herein includes various types of gas turbine engines, internal combustion engines, and the like that combust traditional aviation fuels and/or sustainable aviation fuels (SAFs), or the like. FIG. 2 is a diagrammatic cross-sectional view of gas turbine engine (thermal engine 22) that includes an external shaft 36, a reduction gear box 38, a compressor 40, a combustor 42, a turbine 44, a core gas path 46, a high pressure shaft 48, and a low pressure shaft 50. The gas turbine engine shown in FIG. 2 is a nonlimiting example of a thermal engine 22. The HEP system 20 may include other gas turbine engine configurations, or the thermal engine 22 may be a piston engine or a rotary engine.

The reduction gear box 24 of the HEP system 20 is configured to accept an input rotational drive at a first rotational drive speed and at a first torque and produce an output rotational drive at a second rotational drive speed and at a second torque, wherein the first rotational drive speed is greater than the second rotational drive speed and the second torque is greater than the first torque. The present disclosure is not limited to any particular type of reduction gear box 24.

The eMotor 30 may be an alternating current (AC) motor configured to rotationally drive a component. For example, the eMotor 30 may be configured to rotationally drive at least a portion of the reduction gear box 24, or may be configured to provide rotational drive to a thermal engine 22, or the like.

The eMotor controller 32 may include hardware and controls for providing electrical power to the eMotor 30. The eMotor controller 32 may include an inverter configured to manage electrical power from the battery system 28. The eMotor controller 32 is configured to selectively operate the eMotor 30 in an electric motor mode. In some embodiments, the eMotor controller 32 may be configured to operate the eMotor 30 in a generator mode.

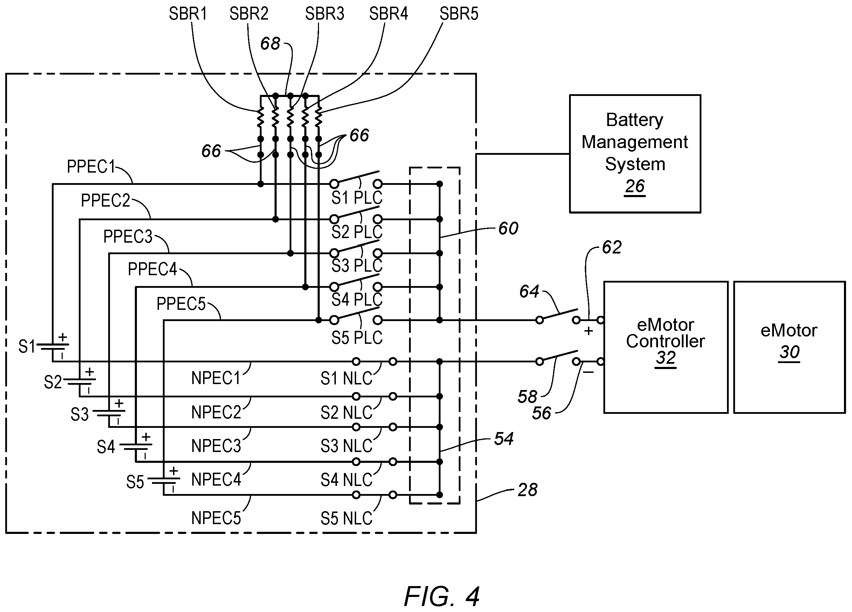

The battery system 28 includes a plurality of battery strings 52 disposed in a parallel configuration. Each battery string 52 includes a plurality of battery cells 52A disposed in series; e.g., see FIG. 3. In the schematics of FIGS. 4-6, the battery strings 52 are labeled as "S1 - S5". The battery strings 52 are configured to accept and store electrical energy in a first operational mode (i.e., a charging mode), and to produce electrical energy in a second operational mode (i.e., a discharging mode).

The battery management system 26 may include hardware, controls, and/or a controller and the like for controlling operation of the battery system 28; e.g., for charging, discharging, and voltage balancing a plurality of battery strings 52 as will be described herein.

The term "controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the HEP system 20 (or components within the HEP system 20 such as the battery management system 26) to accomplish the same algorithmically and/or coordination of components. A controller may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. A controller may include, or may be in communication with, an input device that enables a user to enter data and/or instructions, and may include, or be in communication with, an output device configured, for example to display information (e.g., a visual display or a printer), or to transfer data, etc. Communications between a controller and other system components may be via a hardwire connection or via a wireless connection.

The controllers described herein may be independent controllers, each configured to perform certain functions, or the functionality of separately described controllers may be accomplished by a system controller. The present disclosure is not limited to any particular controller architecture unless specifically stated herein.

Implementation of the techniques, blocks, steps, and means described herein may be done in various ways. For example, these techniques, blocks, steps, and means may be implemented in hardware, software, or a combination thereof. For a hardware implementation, processing devices configured to carry out the described functions and steps (e.g., by executing stored instructions) may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or other electronic units designed to perform the functions described herein, and/or any combination thereof.

Embodiments of the present disclosure may be described herein as a process which is depicted as a flowchart, a flow diagram, a block diagram, etc. Although any one of these structures may describe the operations as a sequential process, many of the operations can be performed in parallel and/or concurrently. In addition, the order of the operations may be rearranged. A process may correspond to a method, a function, a procedure, a subroutine, a subprogram, etc.

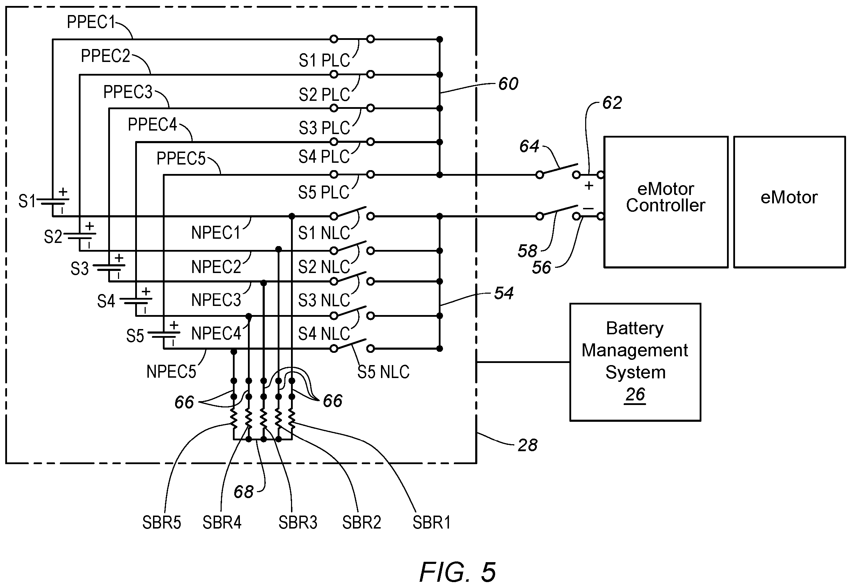

FIGS. 4-6 schematically illustrate battery system 28 embodiments in communication with a battery management system 26, an eMotor controller 32, and an eMotor 30. Referring to FIGS. 4 and 5, the battery system 28 is shown with five (5) battery strings (S1 - S5) disposed in a parallel arrangement. FIGS. 4-6 schematically illustrate a battery system (or battery string module) having five (5) battery strings 52. The present disclosure is not limited to any particular number of battery strings disposed in a parallel configuration. Each battery string (S1 - S5) may be described as having a negative polarity terminal and a positive polarity terminal (shown as "-" and "+"). In the embodiment schematically shown in FIGS. 4 and 5, the negative terminals of the battery strings (S1 - S5) are in electrical communication with an electrical conduit referred to hereinafter as a "bus 54". In the schematic shown in FIGS. 4 and 5, the negative terminal of each battery string S1 - S5 may be in electrical communication with the bus 54 via electrical conductor (e.g., a wire, a trace, a conductor within a circuit board, or the like) that may be referred to as a "negative path electrical conductor" or an "NPEC", and are labeled in FIGS. 4 and 5 as NPEC1 - NPEC5. In the embodiments shown in FIGS. 4 and 5, the bus 54 is in selective electrical communication with a negative terminal 56 of the eMotor controller 32. The "selective electrical communication" is schematically shown by a relay 58 disposable in a closed configuration wherein the negative terminals of the battery strings (S1-S5) are electrically connected to the eMotor controller 32 or disposable in an open configuration wherein the negative terminals of the battery strings (S1-S5) are electrically disconnected from the eMotor controller 32.

In the embodiments shown in FIGS. 4 and 5, a string contactor (e.g., an electrical relay) is in line with the negative terminal of each respective battery string; e.g., string S1 includes string contactor "S1 negative leg contactor" (i.e., "S1 NLC"), string S2 includes string contactor "S2 NLC", and so on. The S1-S5 NLC's are controllable to be disposable in a closed configuration wherein the respective negative leg contactor (S1 NLC - S5 NLC) provides electrical communication through the respective negative leg contactor or disposable in an open configuration wherein the respective negative leg contactor does not provide electrical communication through the respective negative leg contactor.

In the embodiment schematically shown in FIGS. 4 and 5, the positive terminals of the battery strings S1 - S5 are in electrical communication with an electrical conduit referred to hereinafter as a bus 60. In the schematic shown in FIGS. 4 and 5, the positive terminal of each battery string S1 - S5 is in electrical communication with the bus 60 via an electrical conductor (e.g., a wire, a trace, a conductor within a circuit board, or the like) that may be referred to as a "positive path electrical conductors" or "PPEC", and are labeled in FIGS. 4 and 5 as PPEC1 - PPEC5. In the embodiments shown in FIGS. 4 and 5, the bus 60 is in selective electrical communication with a positive terminal 62 of the eMotor controller 32. As described above, the "selective electrical communication" is diagrammatically shown by a relay 64 disposable in a closed configuration wherein the positive terminals of the battery strings (S1-S5) are electrically connected to the eMotor controller 32 or disposable in an open configuration wherein the positive terminals of the battery strings (S 1-S5) are electrically disconnected from the eMotor controller 32. Also similar to the above description, in some embodiments (e.g., as shown in FIGS. 4 and 5) a string contactor (e.g., an electrical relay) may be in line with the positive terminal of each respective battery string; e.g., string S1 includes string contactor "S1 positive leg contactor" (i.e., "S1 PLC"), string S2 includes string contactor "S2 PLC", and so on. The S1-S5 PLC's are controllable to be disposable in a closed configuration wherein the respective positive leg contactor (S1 PLC - S5 PLC) provides electrical communication through the respective positive leg contactor or disposable in an open configuration wherein the respective positive leg contactor does not provide electrical communication through the respective positive leg contactor.

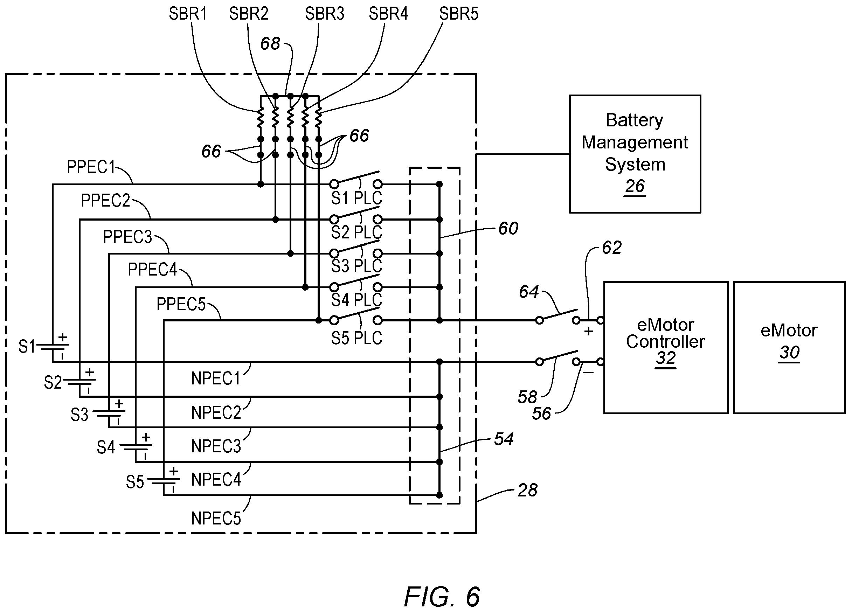

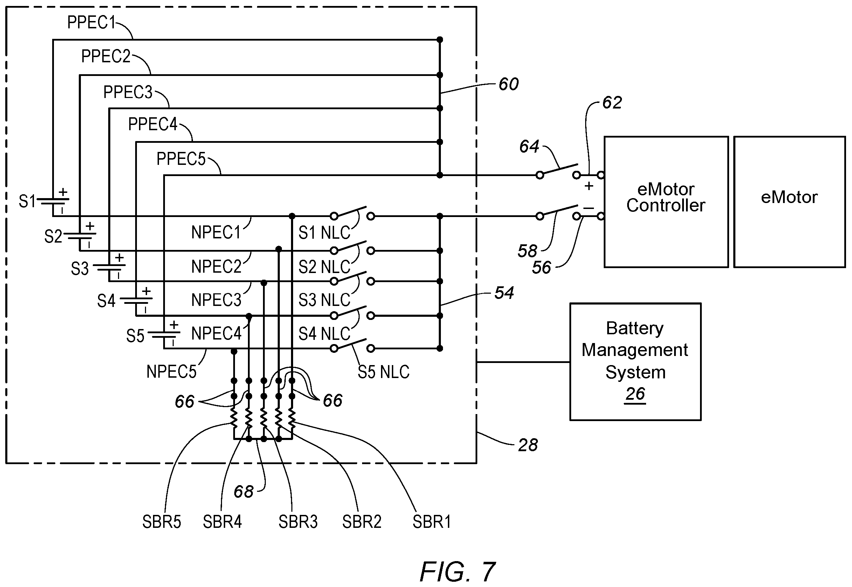

The above description of the layout of the buses 54, 60, the path electrical conductors (i.e., NPEC/PPEC), the contactors (e.g., NLC, PLC), the negative/positive terminals 56, 62 and the relays 58, 64 of the eMotor controller 32 is provided to illustrate an example of acceptable electrical connectivity and is not intended to be a limiting configuration. In some embodiments, only one of the negative/positive terminals 56, 62 of the eMotor controller 32 may include a relay; e.g., the negative terminal 56 of the eMotor controller 32 may be connected to the bus 54 without a relay in line with the positive terminal 62 of the eMotor controller 32 selectively connected to the bus 60 with a relay 64 in line, or conversely the positive terminal 62 of the eMotor controller 32 may be connected to the bus 60 without a relay in line with the negative terminal 56 of the eMotor controller 32 selectively connected to the bus 54 with a relay 64 in line. Some embodiments may include contactors (e.g., NLC, PLC) in only one side of the path electrical conductors (i.e., NPEC/PPEC). For example, FIG. 6 illustrates an embodiment wherein NPEC1 - NPEC5 extend between the respective strings S1 - S5 and the bus 54 without contactors in line, and PPEC1 - PPEC5 extend between the respective strings S1 - S5 and the bus 60 with contactors (S1 PLC - S5 PLC) in line. Conversely, FIG. 7 illustrates an embodiment wherein PPEC1 - PPEC5 extend between the respective strings S1 - S5 and the bus 60 without a contactor in line, and NPEC1 - PPEC5 extend between the respective strings S1 - S5 and the bus 54 with contactors (S1 NLC - S5 NLC) in line. The present disclosure contemplates any configuration that provides the described connectivity shown in the example.

Referring to FIG. 4, the battery system embodiment further includes a plurality of string balancing resistors (SBR1- SBR5). The first string balancing resistor (SBR1) is in electrical communication with the positive side of the S1 string (e.g., connected to the S1 positive path electrical conductor (PPEC1)), the second string balancing resistor (SBR2) is in electrical communication with the positive side of the S2 string (e.g., connected to the S2 positive path electrical conductor (PPEC2)), and so on. A relay 66 is disposed in line with each string balancing resistor (SBR1- SBR5) to provide electrical connection (relay closed) or to break electrical connection (relay open) between a respective string balancing resistor (SBR1-SBR5) and the associated battery string (S1 - S5). The string balancing resistors (SBR1- SBR5) are connected to a common junction 68. In some embodiments, the string balancing resistors (SBR1-SBRS) are fixed resistance devices. In some embodiments, the string balancing resistors may be controllable variable resistance devices.

The battery management system 26 is configured to monitor parameters within a battery string (e.g., voltage, current, or the like), to control the positive and negative leg string contactors (PLC, NLC) and the relays 66 disposed in line with the string balancing resistors (SBR1-SBR5). In those embodiments wherein the string balancing resistors are controllable variable resistance devices, the battery management system 26 may be configured to control the variable resistance devices. In some embodiments, the battery management system 26 may include a controller as described herein; e.g., a device capable of executing a series of instructions that are stored in memory.

In this embodiment shown in FIG. 5, the battery strings (S1-S5) are configured in a manner similar to the embodiment shown in FIG. 4 and described herein. In this embodiment, the first string balancing resistor (SBR1) is in electrical communication with the negative side of the S1 string (e.g., connected to the S1 negative path electrical conductor (NPEC1)), the second string balancing resistor (SBR2) is in electrical communication with the negative side of the S2 string (e.g., connected to the S2 negative path electrical conductor (NPEC2)), and so on. Here again, a relay 66 is disposed in line with each string balancing resistor (SBR1- SBR5) to provide or remove electrical connection between a respective string balancing resistor (SBR1- SBR5) and the associated battery string (S1 - S5), and the string balancing resistors (SBR1- SBR5) are connected to a common junction 68. Here again, the string balancing resistors may be fixed resistance devices or may be controllable variable resistance devices.

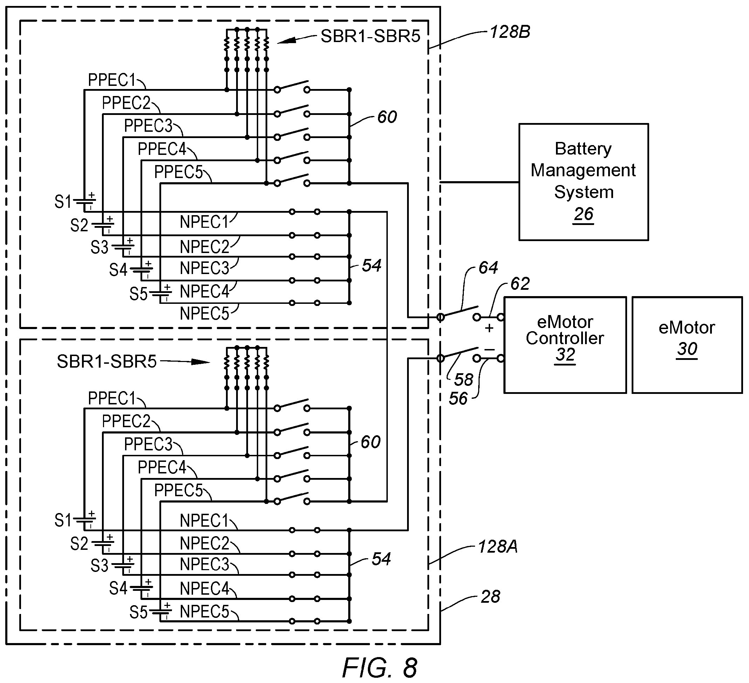

Referring to FIG. 8, another battery system 28 embodiment is schematically shown that includes a plurality of battery string modules 128A, 128B with each module like the battery string module shown in FIG. 4 and described herein. The battery system 28 example shown in FIG. 8 includes a pair of battery string modules (a first battery string module 128A and a second battery string module 128B) but the present disclosure is not limited to having a pair of battery string modules, and may have more than two battery string modules. In the embodiment shown in FIG. 8, the bus 60 in communication with the positive terminals of the battery strings S1 - S5 within the first battery string module 128A is in electrical communication with the bus 54 in communication with the negative terminals of the battery strings S1 - S5 within the second battery string module 128B. The bus 54 in communication with the negative terminals of the battery strings S1 - S5 within the first battery string module 128A is in selective electrical communication with the negative terminal 56 of the eMotor controller 32. The bus 60 in communication with the positive terminals of the battery strings S1 - S5 within the second battery string module 128B is in electrical communication with the positive terminal 62 of the eMotor controller 32. In this manner, the first and second battery string modules 128A, 128B may be described as being in series.

As described herein, multiple battery strings 52 can connect together in parallel (common junction) through a series of contactors to drive a load. In order to connect the battery strings 52 in parallel, the battery string voltages must be within a certain voltage threshold of each other in order not to exceed charge and discharge currents upon connection. At the end of a period of discharging, the individual battery strings 52 within a parallel configuration of battery strings 52 may each reside at a different state of charge. The different states of charge may be attributable to battery strings 52 being at different environmental temperatures, differences in electrical conduction losses in a battery string circuit, differences in battery string age, differences in battery string performance characteristics (e.g., capacity, discharge rate, and the like), and the like. The differences in state of charge can result in different battery strings 52 having different voltages; e.g., a first battery string having a first battery string voltage and a second battery string having a second battery string voltage that are different from one another. In order to reconnect the battery strings 52 safely together again (e.g., for subsequent charging or discharging), the battery string voltages of the battery strings 52 need to be within a certain range (+/- a predetermined voltage) of each other. If the battery string voltages are greater than the predetermined +/- voltage threshold, charge/discharge current within the parallel configuration may exceed desirable limits potentially detrimentally affecting system components; e.g., contactors.

The present disclosure provides a system and method that allows battery strings 52 in a parallel battery string configuration to balance in voltage relative to one another in an acceptable manner when the parallel battery string configuration is disconnected from a load. When the battery system 28 is disconnected from the load, the battery system 28 may be described as being in a "balancing state". For example, embodiments of the present disclosure can be used in an aircraft application that includes a plurality of battery strings 52 disposed in a parallel configuration as part of a HEP system 20, or as part of an all-electric powerplant, or the like. When the propulsion system is not being used to provide power (e.g., aircraft at rest), the present disclosure may be used to balance the voltages of the respective battery strings 52 relative to one another. Alternatively, the present disclosure may be used to balance the voltages of the respective battery strings 52 relative to one another when the aircraft is underway, provided the plurality of battery strings 52 are not providing electrical power; e.g., during a cruise portion of flight within a HEP system 20 wherein the thermal engine 22 provides all propulsion power.

As indicated above, the present disclosure battery system 28 may be used to "drive a load". In the process of "driving a load", electrical energy stored within the battery strings is discharged to be used to power a system component such as an electrical motor. It is contemplated that a HEP system 20 may have the capability when the battery system 28 is not being used to drive a load (i.e., discharging), that the HEP system 20 may be configured to provide electrical energy to the battery system 28 to recharge the battery system 28. In either a discharging or recharging mode, the present disclosure battery system 28 is connected to other components within the HEP system 20 and may be described as being in a "charging / discharging state". To facilitate the present description, the present disclosure will be described in terms of the battery system 28 being connected to a "load". For purposes of the description, "connected to a load" is intended to mean connection of the present disclosure battery system 28 for purposes of discharging electrical energy from the battery system 28 or recharging the battery system 28 with electrical energy; i.e., a "charging / discharging state".

Referring to the embodiments shown in FIGS. 4 and 5, when electrical power is being drawn from the plurality of battery strings 52, S1-S5, the negative leg contactors (S1 NLC - S5 NLC) and the positive leg contactors (S1 PLC - S5 PLC) are maintained in a closed configuration to complete the power circuit and allow the eMotor controller 32 to draw the requisite electrical power for powering the eMotor. In this configuration, the string balancing resistor relays 66 are disposed in an open configuration to avoid parasitic power losses through the string balancing resistors. The embodiment shown in FIG. 6 only includes positive leg contactors (S1 PLC - S5 PLC) and the embodiment shown in FIG. 7 only includes negative leg contactors (S1 NLC - S5 NLC). When electrical power is being drawn from the plurality of battery strings 52, S1-S5 in the FIG. 6 embodiment, the positive leg contactors (S1 PLC - S5 PLC) are maintained in a closed configuration to complete the power circuit, and in the FIG. 7 embodiment, the negative leg contactors (S1 NLC - S5 NLC) are maintained in a closed configuration to complete the power circuit. In these configurations, the string balancing resistor relays 66 are disposed in an open configuration to avoid parasitic power losses through the string balancing resistors.

When electrical power is not being drawn from the plurality of battery strings 52, S1-S5, the positive leg contactors (S1 PLC - S5 PLC) or the negative leg contactors (S1 NLC - S5 NLC) are maintained in an open configuration to break the power circuit, and the string balancing relays 66 are controlled to a closed configuration. The battery embodiments shown in FIGS. 4 and 6 illustrate the positive leg contactors (PLC) disposed in an open configuration to break the power circuit and the string balancing relays 66 disposed in a closed configuration. The battery embodiments shown in FIGS. 5 and 7 illustrate the negative leg contactors (NLC) disposed in an open configuration to break the power circuit and the string balancing relays 66 disposed in a closed configuration. When the string balancing relays 66 are disposed in a closed configuration, the string balancing resistors (SBR1- SBR5) control the relative magnitudes of the charge /discharge currents within the battery strings. The battery string 52, S1-S5 with the lowest voltage receives current from the battery strings 52, S1-S5 with higher voltage. The transfer of current from higher voltage battery strings to lower voltage battery strings continues until all of the battery strings 52, S1-S5 have approximately the same voltage level; hence, the plurality of battery strings disposed in a parallel configuration become "balanced" and the battery strings can subsequently be safely put into service to produce electrical power and/or charged without issue.

In some embodiments, the present disclosure system may be configured (e.g., via the battery management system 26) to sense the state of charge in each battery string 52, S1 - S5. The system may be configured to selectively operate individual string balancing relays 66 between an open and closed configuration and thereby selectively connect certain string balancing resistors (SBR1- SBR5) and certain battery strings 52, S1 - S5 to allow selective balancing between those particular battery strings 52, S1 - S5. This selective balancing technique may in some instances be used to accelerate balancing, facilitate current control, and/or otherwise improve the balancing process within the battery strings 52, S1 - S5.

The terms "balance" or "balanced" as used herein refers to a difference in voltage between battery strings 52, S1-S5 that is associated with charge/discharge current between battery strings that is acceptable for the system at hand; e.g., voltage within a predetermined range (and associated electrical current) that is within defined operational limits for the battery system 28 and therefore not detrimental to components (e.g., contactors and the like) of the battery system 28. The voltage range and associated electrical current may vary depending on the battery system 28 configuration, and the present disclosure is not limited to any particular voltage range as defining when battery strings in the battery system 28 are balanced. That said, in many instances battery strings in embodiments of the present disclosure battery system 28 will be balanced when the voltage difference between battery strings does not exceed +/- 10 volts.

Regarding the battery system 28 embodiment schematically shown in FIG. 8, this configuration may provide improved localized battery string balancing. For example, if one cell has less capacity and lower state of charge than the others, that cell may be recharged / balanced more effectively and intensively than would be the case without subdividing the parallel battery strings, because the voltage difference between imbalanced battery strings would be more significant (in terms of voltage imbalance relative to string voltage) compared to the voltage difference between imbalanced undivided strings.

In some embodiments, the battery management system 26 may be configured to monitor the health of a battery string 52, S1-S5; e.g., via stored instructions. If a battery string 52 is determined to be unhealthy (e.g., not performing according to predetermined standards), the string contactors for that string (e.g., (i.e., Sn PLC and Sn NLC, where "n" is an integer for the specific string) can be controlled to an open configuration and the string balancing relay 66 for that resistor (SBR1-SBR5) can be controlled to an open configuration to functionally remove that battery string 52, S1-S5 from the plurality of battery strings. In addition, in some operational instances it may be desirable to functionally remove one or more battery strings 52, S1-S5 from the power circuit while maintaining other battery strings 52, S1-S5 within the power circuit. Embodiments of the present disclosure system are described herein having all the positive leg contactors (S1 PLC - S5 PLC) or the negative leg contactors (S1 NLC - S5 NLC) maintained in an open configuration to break the power circuit or all maintained in a closed configuration to create the power circuit. The present disclosure is not limited to all of the positive leg contactors (S1 PLC - S5 PLC) being open or closed, or all of the negative leg contactors (S1 NLC - S5 NLC) being open or closed. Embodiments of the present disclosure system may be controllable (via stored instructions) to remove one or more battery strings 52, S1-S5 from the power circuit while maintaining other battery strings 52, S1-S5 within the power circuit. Individual battery strings 52, S1-S5 may be selectively removed or returned to the power circuit using the respective leg contactors (S1 PLC - S5 PLC, S1 NLC - S5 NLC) for that respective battery string 52, S1-S5.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A battery system, comprising:
a plurality of battery strings disposed in a parallel configuration, wherein each battery string includes a positive terminal and a negative terminal;
a plurality of negative path electrical conductors;
a plurality of positive path electrical conductors;
wherein the negative terminal of each battery string of the plurality of battery strings is selectively in electrical communication with a load through a respective negative path electrical conductor of the plurality of negative path electrical conductors, and the positive terminal of each battery string of the plurality of battery strings is selectively in electrical communication with the load through a respective positive path electrical conductor of the plurality of positive path electrical conductors; and
a plurality of string balancing resistors; and
wherein the battery system is configurable in a balancing state, and in the balancing state the battery system is disconnected from the load and the battery system is configured such that the string balancing resistors cause the plurality of battery strings to balance in voltage relative to one another.

2. The battery system of claim 1, wherein the plurality of negative path electrical conductors are in electrical communication with one another and selectively in electrical communication with a load negative terminal; and
the plurality of positive path electrical conductors are in electrical communication with one another and selectively in electrical communication with a load positive terminal.

3. The battery system of claim 1 or 2, wherein each respective string balancing resistor of the plurality of string balancing resistors is disposed in selective electrical communication with a respective positive path electrical conductor of the plurality of positive path electrical conductors.

4. The battery system of claim 3, further comprising a plurality of string balancing resistor relays, SBR relays, wherein each respective SBR relay of the plurality of SBR relays is disposed in line with a respective string balancing resistor, and each SBR relay of the plurality of SBR relays is disposable in an open configuration and in a closed configuration; and, optionally, wherein the string balancing resistors are connected to a common junction.

5. The battery system of claim 4, wherein each negative path electrical conductor, NPEC, of the plurality of negative path electrical conductors includes an NPEC contactor relay disposable in an open configuration or in a closed configuration, and each positive path electrical conductor, PPEC, of the plurality of positive path electrical conductors includes a PPEC contactor relay disposable in an open configuration or in a closed configuration; and
wherein in the balancing state the plurality of SBR relays are in the closed configuration, the PPEC contactor relays are in the open configuration, and the NPEC contactor relays are in the closed configuration.

6. The battery system of claim 5, wherein the battery system is configurable in a charging/discharging state, and in the charging/discharging state, the plurality of SBR relays are in the open configuration, the PPEC contactor relays are in the closed configuration, and the NPEC contactor relays are in the closed configuration; and, optionally,
further comprising a battery management system configured to control the plurality of SBR relays, the PPEC contactor relays, and the NPEC contactor relays such that in the balancing state, the plurality of SBR relays are controlled to be in the closed configuration, the PPEC contactor relays are controlled to be in the open configuration, and the NPEC contactor relays are controlled to be in the closed configuration.

7. The battery system of claim 1 or 2, wherein each respective string balancing resistor of the plurality of string balancing resistors is disposed in selective electrical communication with a respective negative path electrical conductor of the plurality of negative path electrical conductors.

8. The battery system of claim 7, further comprising a plurality of string balancing resistor relays, SBR relays, wherein each respective SBR relay of the plurality of SBR relays is disposed in line with a respective string balancing resistor, and each SBR relay of the plurality of SBR relays is disposable in an open configuration and in a closed configuration; and, optionally, wherein the string balancing resistors are connected to a common junction.

9. The battery system of claim 8, wherein each negative path electrical conductor, NPEC, of the plurality of negative path electrical conductors includes a NPEC contactor relay disposable in an open configuration or in a closed configuration, and each positive path electrical conductor, PPEC, of the plurality of positive path electrical conductors includes a PPEC contactor relay disposable in an open configuration or in a closed configuration; and
wherein in the balancing state the plurality of SBR relays are in the closed configuration and the NPEC contactor relays are in the open configuration.

10. The battery system of claim 9, wherein in the balancing state the PPEC contactor relays are in the closed configuration; and, optionally,
wherein the battery system is configurable in a charging/discharging state, and in the charging/discharging state, the plurality of SBR relays are in the open configuration, the PPEC contactor relays are in the closed configuration, and the NPEC contactor relays are in the closed configuration.

11. The battery system of claim 10, further comprising a battery management system configured to control the plurality of SBR relays, the PPEC contactor relays, and the NPEC contactor relays such that in the balancing state, the plurality of SBR relays are controlled to be in the closed configuration, the PPEC contactor relays are controlled to be in the closed configuration, and the NPEC contactor relays are controlled to be in the open configuration.

12. A battery system, comprising:
a plurality of battery string modules, wherein each battery string module includes:
a plurality of battery strings disposed in a parallel configuration, wherein each battery string includes a positive terminal and a negative terminal;
a plurality of negative path electrical conductors;
a plurality of positive path electrical conductors;
wherein the negative terminal of each battery string of the plurality of battery strings is in electrical communication with a first bus through a respective negative path electrical conductor of the plurality of negative path electrical conductors, and the positive terminal of each battery string of the plurality of battery strings is in electrical communication with a second bus through a respective positive path electrical conductor of the plurality of positive path electrical conductors; and
a plurality of string balancing resistors; and
wherein the battery string modules are disposed in a series connection with one another; and
wherein the battery system is configurable in a balancing state, and in the balancing state the battery string modules are disconnected from a load and the battery string modules in each battery string module are configured such that the string balancing resistors in the battery string module cause the plurality of battery strings in the battery string module to balance in voltage relative to one another.

13. A method of operating a battery system having a plurality of battery strings, the method comprising:
providing a plurality of battery strings disposed in a parallel configuration, wherein each battery string includes a positive terminal and a negative terminal, and providing a plurality of negative path electrical conductors (NPEC), each having a NPEC contactor relay disposable in an open configuration or in a closed configuration, and providing a plurality of positive path electrical conductors (PPEC), each having a PPEC contactor relay disposable in an open configuration or in a closed configuration;
providing a plurality of string balancing resistors, wherein the string balancing resistors are connected to a common junction, and providing a string balancing resistor relay (SBR relay) associated with each string balancing resistor of the plurality of string balancing resistors, wherein each respective SBR relay is disposable in an open configuration and in a closed configuration;
in a charging / discharging state, controlling the NPEC contactor relays to be in the closed configuration, the PPEC contactor relays to be in the closed configuration, and the SBR relays to be in the open configuration; and
in a balancing state, controlling the SBR relays to be in the closed configuration, and controlling the NPEC contactor relays to be in the closed configuration and the PPEC contactor relays to be in the open configuration, or controlling the NPEC contactor relays to be in the open configuration and the PPEC contactor relays to be in the closed configuration.

14. The method of claim 13, wherein the plurality of negative path electrical conductors are selectively in electrical communication with one another and selectively in electrical communication with a load negative terminal, the plurality of positive path electrical conductors are selectively in electrical communication with one another and selectively in electrical communication with a load positive terminal; and
in the balancing state, the NPEC contactor relays are controlled to be in the open configuration and the PPEC contactor relays are controlled to be in the closed configuration; or wherein the plurality of negative path electrical conductors are selectively in electrical communication with one another and selectively in electrical communication with a load negative terminal, the plurality of positive path electrical conductors are selectively in electrical communication with one another and selectively in electrical communication with a load positive terminal; and
in the balancing state, the NPEC contactor relays are controlled to be in the closed configuration and the PPEC contactor relays are controlled to be in the open configuration.

15. The method of claim 13 or 14, wherein a battery management system is used to control the plurality of SBR relays, the PPEC contactor relays, and the NPEC contactor relays between the charging / discharging state and the balancing state.
